## Europäisches Patentamt

(19) **European Patent Office**

**Office européen des brevets**

(11) Publication number: **0 104 825**
**B1**

(12) # EUROPEAN PATENT SPECIFICATION

(45) Date of publication of patent specification: **22.02.89**

(51) Int. Cl.⁴: **G 01 N 1/28, C 09 J 3/14,**
**C 08 J 3/16, C 08 L 63/10**

(21) Application number: **83305305.1**

(22) Date of filing: **12.09.83**

(54) Specimen mounting adhesive composition.

(30) Priority: **13.09.82 US 417254**

(43) Date of publication of application:
**04.04.84 Bulletin 84/14**

(45) Publication of the grant of the patent:
**22.02.89 Bulletin 89/08**

(84) Designated Contracting States:
**BE CH DE FR GB IT LI NL SE**

(56) References cited:
**FR-A-2 456 134**
**US-A-3 466 209**
**US-A-3 891 327**
**US-A-3 939 019**
**US-A-4 257 346**

**IBM TECHNICAL DISCLOSURE BULLETIN, vol.
12, no. 4, September 1969, page 573, New
York, US R.A. CHRISTIANSEN et al.: "Histology
specimen slide" p. 573**

**PATENTS ABSTRACTS OF JAPAN; vol. 5, no.
177 (P-89)849r, 13th November 1981**

(73) Proprietor: **MOUNT SINAI SCHOOL OF
MEDICINE OF THE CITY UNIVERSITY OF NEW
YORK**
**One Gustave L. Levy Place**
**New York, NY 10029 (US)**

(72) Inventor: **Ornstein, Leonard**
**5 Biltom Road**
**White Plains New York 10607 (US)**

(74) Representative: **Wain, Christopher Paul et al
A.A. THORNTON & CO. Northumberland House
303-306 High Holborn
London WC1V 7LE (GB)**

## Description

This invention relates to curable adhesive compositions useful for biological specimen mounting.

Very thin slices of animal and plant tissue are prepared for many different kinds of microscopic studies by sectioning with a variety of kinds of microtomes. The tissue may be cut fresh, but the soft and compliant nature of most fresh tissue makes it very difficult to cut undistorted thin sections. If the tissue is frozen and is cut on a freezing microtome or in a cryostat at temperatures below 0°C (32°F), the hardness of the frozen water within the tissue permits sections to be cut relatively easily as thin as a few micrometers. However, these sections are brittle and friable and therefore difficult to handle and process further. To make sectioning of tissue still easier, a number of procedures produce a block of supported tissue which has superior sectioning properties and from which high quality, relatively easy-to-handle tissue sections can be made. Such procedures typically involve: (1) fixation of the tissue in a solution which insolubilises the natural polymers of which tissue cells are composed, and which hardens them; (2) dehydration through a series of water-miscible (e.g. an alcohol) and then paraffin or plastic-monomer-miscible (e.g. toluene or xylene) solvents; (3) infiltration in melted paraffin or monomer solution; and (4) embedding by freezing the paraffin or polymerising the monomer to form a solid polymer. [Staining Methods, J. F. S. McManus and R. W. Mowry (P. B. Hoeber, Inc., N.Y. 1960); Techniques for Electron Microscopy, D. Kay, Ed. (Blackwell Sci. Publ., Oxford, England, 1965) pp. 166-212.]

However, there are occasional specimens which remain difficult to section. As the section is cut, the parts of the cut section fragment and fall from the cut section, or fall from the section as it is removed from the microtome.

A. Palmgren, Nature, Vol. 174, p. 46 (1954), introduced the use of a conventional adhesive tape as a sectioning aid for the cutting of very large, hard or brittle specimens. A piece of adhesive tape is applied to the surface of a cut frozen or paraffin block, just before the specimen is advanced the incremental thickness of a (next) section. The microtome advances and the next section is cut and is thus supported by the applied tape. The quality of the uncompressed section of hard brittle and friable tissue produced by this means can be far superior to that of a conventional section of the same block of tissue. However, following Palmgren, processing such a section while it remains on the tape, or transferring it to a glass slide (to permit it to be processed thereafter in a conventional way) involved elaborate, time-consuming and inconvenient methods, which are also potentially damaging to the section. Palmgren's method, therefore, did not become popular.

W. E. Beckel, Nature, Vol. 184, p. 1584 (1959) introduced the use of Scotch brand No. 810 cellulose-acetate-backed adhesive tape in Palmgren's process. The tape-mounted sections were applied, section-side down on conventionally wet albuminised glass slides. After thorough drying for a few hours, the adhesive backing, the adhesive layer and the paraffin were all dissolved in tetrahydrofuran in 30 minutes, leaving the section adhering to the glass slide, and available for further processing by conventional techniques. Alternatively, chloroform for 2 minutes, followed by xylene for 30 minutes, worked equally well. Beckel also described a "more rapid method" which used a film of albumin and a solution of 2 per cent celloidin in methyl benzoate or ethyl alcohol to "cement" the section to the glass slide followed by 1 minute in chloroform and 10 minutes in xylene to complete the treatment. Some other equally time-consuming variations were described.

D. S. Gowers and R. E. Miller, Nature, Vol. 190, p. 425 (1961), attempted to repeat Beckel's method but found that, with available Scotch brand No. 810 tape, the adhesive could not be dissolved, and with the best alternative available tape, Tuck brand No. 200, safe removal of the tape without damaging the section in solvent took from 1 to 10 hours.

R. P. Wedeen and H. I. Jernow, Am. J. Physiol., Vol. 214, p. 776 (1968) used cyanoacrylate (Eastman 910 "super-glue") to attach adhesive-tape-supported frozen sections to radioautographic (photographic) plates. The cyanoacrylate is initially liquid, but polymerises to a solid when it is squeezed out into a thin film. The cyanoacrylate polymer is soluble in xylene and other processing solvents, which would cause the section to float free, and so is not useful for ordinary use.

In another area of study relating to the field of specimen section handling, various resinous mounting media have been developed. After the tissue section has been stained, the slide is transferred from water through alcoholic and then resin-compatible solvents, such as xylene, and the section is mounted in a resinous medium chosen to have a refractive index which closely approximates the average refractive index of the unstained tissue specimens, e.g. a refractive index from about 1.530 to about 1.570. Such are described, for example, in U.S. Patent No. 4,120,991, and McManus & Mowry, above. Also, U.S. patent specification no. 4257346, which relates to apparatus for mounting tissue sections, refers to a composition for mounting a tissue specimen on a slide. The composition comprises a mixture of low volatility, low viscosity, liquid acrylic reactomers, a UV-light sensitive catalyst, and a volatile solvent. The acrylic reactomers are chosen to provide a final refractive index after polymerisation of 1.53 to 1.57, to match that of the specimen.

French patent specification no. 2456134 describes an adhesive composition which comprises, as essential components, an acrylic or methacrylic epoxy resin, and a polymerisable methacrylate of a tertiary amine. It may contain, as an optional extra component, an ethylenically unsaturated urethane acrylic resin. These compositions are described as useful for bonding various plastics sheets to glass or to polished steel. There is no suggestion of any utility for the mounting of biological specimens.

We have now devised a curable adhesive composition for transferring and mounting a tape-supported tissue specimen onto a specimen support whereby certain disadvantages of prior art procedures are reduced or overcome.

According to the present invention, there is provided a curable adhesive composition which comprises at least one oligomeric acrylate ester of an epoxy resin, a polymerisation curing initiator, and at least one other acrylate oligomer, characterised in that said oligomeric acrylate ester of an epoxy resin is a diacrylate ester having terminal acryl or methacryl groups, and having when cured a refractive index greater than 1.56; said other acrylate oligomer is an oligomer having terminal acryl or methacryl groups and having, when cured, a refractive index less than 1.53; the weight ratio of said epoxy ester to said other oligomer being from about 2:1 to about 3:1 by weight; the said initiator being a thermal initiator selected from benzoyl peroxide, acetyl peroxide or azoisobutyronitrile or a photo-initiator selected from benzoin, an acetophenone or equivalent; the weight ratio of epoxy ester and other oligomer to initiator being approximately 20:1 by weight; the composition also comprising a solvent which is toluene or isopropanol in an amount such that the composition comprises about 0.5 g of epoxy ester and other acrylate oligomer per 1 ml of composition, said solvent being removed, in use, by evaporation before curing; and wherein the composition is so formulated that it is suitable to serve as a high tack pressure sensitive-adhesive at the temperature of use after drying and before curing for transferring and mounting a tape-supported . histological tissue section onto a specimen support for further processing, the uncured composition having a sufficiently low diffusion coefficient that it does not diffuse into the tissue section at the temperature of use, and a sufficiently high viscosity that it does not flow into the tissue section during application thereof to the specimen support, the composition being curable by heating to a temperature of from 40 to 200°C in the case of thermal initiation, or in the case of photo-initiation, by exposure to a UV light source of radiation dose equivalent to a 4-watt black light fluorescent lamp with a phosphor peak-light output near 350 nm for 3 minutes at a distance of a few inches (1 inch = 2.54 cm) the cured adhesive composition having a refractive index between about 1.53 and 1.56, and being substantially non-swelling, tack free, insoluble, unreactive and non-ionic, and capable of strongly bonding to both the tissue section and the specimen support.

The compositions of the invention:

a. are high tack pressure-sensitive adhesives prior to cure;

b. have a sufficiently low diffusion coefficient before cure to substantially prevent diffusion into tissue;

c. have a viscosity which is sufficiently high before cure to substantially prevent flow into tissue during specimen application to said specimen support;

d. are rapidly cured;

e. are substantially non-swelling, tack-free, insoluble, unreactive and non-ionic, after cure;

f. after cure, bond strongly to both the specimen surface and support surface.

In use, the curable adhesive compositions of the present invention are typically coated onto a glass microscope slide. A cut paraffin embedded section, supported on adhesive tape, is pressed, section-side down, onto the adhesive-coated glass microscope slide. The contact is ensured by smoothing with moderate finger pressure. When the compositions contain a photoinitiator, the laminate, bottom-of-the glass-side up, is placed within a few inches of a 4-watt black-light fluorescent lamp with a phosphor peak-light output near 350 nm, for 3 minutes. The laminate is then immersed in a solvent, such as xylene, and the adhesive tape is gently peeled away over a period of about 5 seconds. The very strong bond between the bottom of the section and the glass slide make this otherwise critical step very easy. The solvent greatly weakens the tape-adhesive-to-tissue and the tape-adhesive-to-tape-backing bonds. Any remaining adhesive layer from the tape and the paraffin are dissolved away in about one minute with gentle agitation, and the slide is ready for processing in the conventional manner. However, for a detailed description of the method, reference is made to our co-pending European patent application no. 83305306.9 published on 21.03.84 as EP-A-103477 filed on even date herewith.

In a preferred embodiment, a composition of the invention comprises a diacrylate-terminated polyurethane, a diacrylate ester of an epoxy resin, a diethoxyacetophenone initiator, and toluene or isopropanol as a conventional organic solvent.

A particularly preferred composition comprises a mixture of high molecular weight inter-reactive oligomers. The high molecular weight ensures both a high viscosity and a low diffusion coefficient. The upper limitation of the molecular weight is such that there remains high tack in the precured mixture when coated on a mounting surface.

In the compositions of the invention, the oligomeric acrylate ester of an epoxy resin has a cured refractive index above 1.560, and the other acrylate oligomer has a cured refractive index less than 1.530. Preferably, said other acrylate oligomer is a polyurethane diacrylate oligomer. Both cured resins must be resistant to histological stains and solvents. Both resins have terminal acryl or methacryl groups to permit radical initiated crosslinked polymerisation. These oligomer resins are mixed in proportions, more fully described below, which provide a cured refractive index between about 1.530 and about 1.560, using the Dale-Gladstone equation described in standard physical chemistry texts and procedures.

Components particularly preferred in forming the compositions of the invention include those of low refractive index such as the diacrylate-terminated polyurethanes known as Purelast 190, 186 and 169, available from Polymer Systems Corporation, Little Falls, New Jersey, and those of high refractive index such as the diacrylate esters of epoxy resins known as Epicryl 3 resin and Shell Developmental Polyester Resin DRH 301.1, both available from Shell Corporation, a division of Shell Oil Company, Houston, Texas.

A further essential component of the composition is an initiator, which is either a thermal initiator or, more preferably, a photoinitiator. As thermal initiators, we use benzoyl peroxide, acetylperoxide or azoisobutyronitrile. When curing is to be effected thermally, it is preferable to add the initiator just prior to curing. The thermal treatment is effectively achieved by heating at a temperature from about 40°C to about 200°C. Alternatively, a broad spectrum of photoinitiators can be used including benzoin and acetophenones such as 2,2-dimethoxy-2-phenylacetophenone and 2,2-diethoxyacetophenone, and equivalents. The preferred photoinitiator for use with the above polymer mixture is 2,2-diethoxyacetophenone, available from Upjohn Company, Fine Chemical Division, New Haven, Connecticut. The toluene and isopropanol used are the standard commercially available reagent grade solvents.

The proportions of the epoxy ester to the urethane or other resin are from about 2:1 to about 3:1 by weight. The ratio of the combined resins to the initiator component is approximately 20:1 by weight. About 0.5 grams per millilitre of the mixture of the above two resins in the solvent is used.

The compositions of the invention are suitable for layering on specimen supports such as glass microscope slides. They can, for example, be layered by printing, spraying or spreading in the solvents which thereafter evaporate. In one preferred embodiment, the composition is coated by hand, using a blade coating device, or by machine, using techniques such as dip or bead coating. If machine coating is used, hopper coating techniques, such as are known in the photographic industry, are preferred.

The thickness of any layer and its degree of permeability are widely variable and dependent on actual use. Dry thickness of the adhesive prior to curing is from about 10 to about 25 micrometers.

## Claims

1. A curable adhesive composition which comprises at least one oligomeric acrylate ester of an epoxy resin, a polymerisation curing initiator, and at least one other acrylate oligomer, wherein said oligomeric acrylate ester of an epoxy resin is a diacrylate ester having terminal acryl or methacryl groups, and having when cured a refractive index greater than 1.56; said other acrylate oligomer is an oligomer having terminal acryl or methacryl groups and having, when cured, a refractive index less than 1.53; the weight ratio of said epoxy ester to said other oligomer being from about 2:1 to about 3:1 by weight; the said initiator being a thermal initiator selected from benzoyl peroxide, acetyl peroxide or azoisobutyronitrile or a photo-initiator selected from benzoin, an acetophenone or equivalent; the weight ratio of epoxy ester and other oligomer to initiator being approximately 20:1 by weight; the composition also comprising a solvent which is toluene or isopropanol in an amount such that the composition comprises about 0.5 g of epoxy ester and other acrylate oligomer per 1 ml of composition, said solvent being removable by evaporation before curing; and wherein the composition is so formulated that it is suitable to serve as a high tack pressure sensitive-adhesive at the temperature of use after drying and before curing for transferring and mounting a tape-supported histological tissue section onto a specimen support for further processing, the uncured composition having a sufficiently low diffusion coefficient that it does not diffuse into the tissue section at the temperature of use, and a sufficiently high viscosity that it does not flow into the tissue section during application thereof to the specimen support, the composition being curable by heating to a temperature of from 40° to 200°C in the case of thermal initiation, or in the case of photo-initiation, by exposure to a UV light source of radiation dose equivalent to a 4-watt black light fluorescent lamp with a phosphor peak-light output near 350 nm for 3 minutes at a distance of a few inches (1 inch = 2.54 cm) the cured adhesive composition having a refractive index between about 1.53 and 1.56, and being substantially non-swelling, tack free, insoluble, unreactive and non-ionic, and capable of strongly bonding to both the tissue section and the specimen support.

2. A composition according to claim 1 wherein said other acrylate oligomer is a polyurethane acrylate oligomer.

3. A composition according to claim 1 or 2, wherein the acetophenone photo-initiator is 2,2-dimethoxy-2-phenylacetophenone or 2,2-diethoxyacetophenone.

4. The use of a curable adhesive composition as defined in claim 1, 2 or 3, for transferring and mounting a tape-supported histological tissue section onto a specimen support.

## Patentansprüche

1. Aushärtbarer Klebestoff aus mindestens einem oligomeren Acrylsäureester eines Epoxidharzes, einem Polymerisationshärtungsinitiator und mindestens einem weiteren oligomeren Acrylat, wobei der oligomere Acrylsäureester eines Epoxidharzes ein Diacrylsäureester mit endständigen Acryl- oder Methacrylgruppen ist und im ausgehärteten Zustand einen Brechungsindex von über 1,56 aufweist, während das andere oligomere Acrylat endständige Acryl- oder Methacrylgruppen sowie im ausgehärteten Zustand einen Brechungsindex von unter 1,53 aufweist, das Gewichtsverhältnis von Epoxidester zu dem weiteren Oligomeren etwa 2:1 bis etwa 3:1 beträgt, der Initiator ein thermischer Initiator aus der aus Benzoylperoxid, Acetylperoxid oder Azoisobutyronitril bestehenden Gruppe oder ein Photoinitiator aus der aus Benzoin, einem Acetophenon oder Äquivalent davon bestehenden Gruppe ist, das Gewichtsverhältnis von Epoxidester und weiterem Oligomeren zu dem Initiator etwa 20:1 beträgt, der Klebestoff außerdem Toluol oder Isopropanol als Lösungsmittel in einer solchen Menge enthält, daß der Klebestoff etwa 0,5 g des Epoxidesters und weiteren oligomeren Acrylats je Milliliter enthält, das Lösungsmittel durch Verdampfen vor dem Aushärten entfernbar ist und der Klebestoff derart formuliert ist, daß er sich bei der Verwendungstemperatur nach dem Trocknen und vor dem Aushärten als stark klebendes, druckempfindliches Klebemittel zum Überführen und Aufbringen eines histologischen Gewebsschnittes, der auf einem Klebeband gehaltert ist, auf einen Probenträger zur weiteren Verarbeitung eignet, wobei der ungehärtete Klebestoff einen hinreichend niedrigen Diffusionskoeffizienten aufweist, daß er bei der Verwendungstemperatur nicht in den Gewebeschnitt eindiffundiert, sowie eine hinreichend hohe Viskosität besitzt, daß er während des Aufbringens des Gewebsschnittes auf den Probenträger nicht in den Gewebsschnitt hineinfließt, wobei ferner der Klebestoff im Falle einer thermischen Initiierung durch Erhitzen auf eine Temperatur von 40 bis 200°C bzw. im Falle einer Photoinitiierung durch Belichten mit einer Ultraviolettlichtquelle mit einer Strahlungsdosis, die der maximalen Phosphorlichtausbeute einer 4-Watt-UV-Fluoreszenzlampe bei etwa 350 nm während 3 min und bei einer Entfernung von einigen Zoll (1 Zoll = 2,54 cm) entspricht, aushärtbar ist, und der ausgehärtete Klebestoff einen Brechungsindex zwischen 1,53 und 1,56 aufweist und im wesentlichen nicht quellbar, klebfrei, unlöslich, nicht reaktiv und nicht ionisch sowie in der Lage ist, sowohl zu dem Gewebsschnitt als auch zu dem Probenträger eine starke Bindung auszubilden.

2. Klebestoff gemäß Anspruch 1, dadurch gekennzeichnet, daß das weitere oligomere Acrylat ein oligomeres Polyurethanacrylat ist.

3. Klebestoff gemäß Anspruch 1 oder 2, dadurch gekennzeichnet, daß der Acetophenon-Photoinitiator 2,2-Dimethoxy-2-phenylacetophenon oder 2,2-Diethoxyacetophenon ist.

4. Verwendung eines aushärtbaren Klebestoffs gemäß einem der Ansprüche 1, 2 oder 3 zum Überführen und Aufbringen eines histologischen Gewebsschnittes, der durch ein Klebeband gehaltert ist, auf einen Probenträger.

## Revendications

1. Composition adhésive durcissable qui comprend au moins un ester acrylate oligomère d'une résine époxyde, un amorceur de durcissement par polymérisation et au moins un autre acrylate oligomère, caractérisée en ce que ledit ester acrylate oligomère de résine époxyde est un ester diacrylate présentant des groupes terminaux acryliques ou méthacryliques et ayant à l'état durci un indice de réfraction supérieur à 1,56; ledit autre acrylate oligomère est un oligomère comportant des groupes acryliques ou méthacryliques terminaux et ayant à l'état durci un indice de réfraction inférieur à 1,53; le rapport en poids dudit ester d'époxyde audit autre oligomère étant d'environ 2/1 à environ 3/1 en poids; ledit amorceur étant un amorceur thermique choisi parmi le peroxyde de benzoyle, le peroxyde d'acétyle ou l'azolsobutyronitrile ou un photo-amorceur choisi parmi la benzoïne, une acétophénone ou un équivalent; le rapport en poids d'ester d'époxyde et d'autre oligomère à l'amorceur étant environ de 20/1 en poids; la composition comportant aussi un solvant qui est le toluène ou l'isopropanol en quantité telle qu'elle comprenne environ 0,5 d'ester d'époxyde et autre acrylate oligomère par 1 ml de composition, ledit solvant pouvant être éliminé par évaporation avant durcissement; et où la composition est formulée en sorte qu'elle convient pour servir d'adhésif adhérant par pression fortement collant à la température d'utilisation après séchage et avant durcissement en vue du transfert et du montage d'une coupe de tissu histologique supportée par ruban adhésif sur support de spécimen aux fins de traitement ultérieur, la composition non durcie ayant un coefficient de diffusion suffisamment faible pour ne pas pénétrer par diffusion dans la coupe de tissu à la température d'utilisation et une viscosité assez élevée pour ne pas pénétrer par écoulement dans la coupe de tissu lors de l'application de celle-ci sur le support de spécimen, la composition étant durcissable par chauffage à une température de 40 à 200°C dans le cas d'amorçage thermique, ou dans le cas de photo-amorçage, par exposition à une source de lumière ultraviolette à dose de rayonnement équivalent à une lampe fluorescente à lumière noire de 4 watts émettant de la lumière à crête de iuminescence voisine de 350 nm pendant 3 minutes à une distance de quelques inches (1 inch = 2,54 cm), la composition adhésive durcie ayant un indice de réfraction de 1,53 à 1,56 et étant sensiblement non susceptible de gonflement, non collante, insoluble, non réactive et non ionique et susceptible d'adhérer fortement tant à la coupe de tissu qu'au support de spécimen.

2. Composition selon la revendication 1 dans laquelle ledit autre acrylate oligomère est un acrylate d'uréthanne oligomère.

3. Composition selon la revendication 1 ou 2 dans laquelle l'acétophénone de photo-amorçage est la 2,2-diméthoxy-2-phénylacétophénone ou la 2,2-diéthoxyacétophénone.

4. Utilisation d'une composition adhésive durcissable selon la revendication 1, 2 ou 3 pour le transfert et le montage d'une coupe de tissu histologique supportée par ruban sur un support de spécimen.